# EUROPÄISCHE PATENTSCHRIFT

(11) **EP 2 013 995 B1**
(45) Veröffentlichungstag und Bekanntmachung des Hinweises auf die Patenterteilung: **20.07.2011**
(21) Anmeldenummer: 07727599.8
(22) Anmeldetag: 30.03.2007
(51) Int. Cl.: H04J 3/06, H04B 7/26

(54) **VERFAHREN ZUR SYNCHRONISATION VON BAUGRUPPEN EINER BASISSTATION**
METHOD FOR SYNCHRONIZATION OF ASSEMBLIES IN A BASE STATION
PROCEDE POUR LA SYNCHRONISATION DE MODULES D'UNE STATION DE BASE

(30) Priorität: 26.04.2006 DE 102006019475
(43) Veröffentlichungstag der Anmeldung: 14.01.2009
(73) Patentinhaber: Nokia Siemens Networks GmbH & Co. KG, 81541 München (DE)
(72) Erfinder: BOMMAS, Helmut, 89077 Ulm (DE); SPLETT, Armin, 89079 Ulm (DE)
(86) Internationale Anmeldenummer: PCT/EP2007/053127
(87) Internationale Veröffentlichungsnummer: WO 2007/124995

(56) Entgegenhaltungen:
- EP-A- 1 519 505
- WO-A-00/38361
- WO-A-01/55803
- US-A- 5 062 124
- "CPRI Specification V2.0 (2004-10-01)" INTERNET CITATION, [Online] 1. Oktober 2004 (2004-10-01), XP002359217 Gefunden im Internet: URL:http://www.cpri.online/> [gefunden am 2005-12-15]

## Beschreibung

Die Erfindung betrifft ein Verfahren zur Synchronisation von Baugruppen einer Basisstation auf ein Referenz-Taktsignal.

Es ist bekannt, zur Synchronisation von abgesetzten Einheiten bzw. von Baugruppen einer Basisstation einen so genannten "Master-Oszillator" zu verwenden, der eine hohe absolute Frequenzgenauigkeit aufweisen muss. Der Oszillator wird dabei über eine Phasenregelschleife auf ein Referenzsignal einer im allgemeinen externen Referenzquelle abgestimmt.

Beispielsweise wird als Referenz für eine absolute Zeit- bzw. Phasengenauigkeit ein GPS-Signal ("Global Positioning System", GPS) verwendet, das über eine GPS-Antenne empfangen wird. Die GPS-Antenne ist dabei üblicherweise nahe einer Sende-Empfangsantenne der Basisstation angeordnet. Das empfangene GPS-Signal muss dann üblicherweise über eine längere Wegstrecke unter Verwendung einer eigens dafür vorgesehenen Übertragungsverbindung bzw. Leitung zum Master-Oszillator geleitet werden. Dies erfolgt aufgrund der Leistungslänge im allgemeinen unter einer beträchtlichen Signaldämpfung. Zusätzlich werden hohe Kosten durch die Leitungslänge und durch einen zusätzlichen Leitungs-Montageaufwand verursacht.

Insbesondere bei räumlich getrennten Baugruppen einer Basisstation, die als "Tower-Mounted-Radio"-Anordnung ausgebildet ist, sind diese Nachteile bedeutend. Dabei ist eine als "Radio-Head" bezeichnete erste Baugruppe antennennah angeordnet, während weitere Baugruppen antennenfern angeordnet sind. Entsprechend ist es notwendig, sowohl die abgesetzte erste Baugruppe als auch die restlichen Baugruppen mit dem Referenzsignal hochgenau zeitlich zu synchronisieren.

Das DoKument CPRI specification V2-0, veröffentlicht um 1 Oktober 2004 offenbart den Oberbegriff von Anspruch 1.

EP 1 519 505 (Alcatel) offenbart die Übertragung einer Phasendifferenz von einer ersten zu einer zweiten Baugruppe.

Es ist daher Aufgabe der vorliegenden Erfindung, ein Verfahren für eine hochgenaue Zeitsynchronisation von verteilten Baugruppen einer Basisstation anzugeben, das mit möglichst geringem Aufwand kostengünstig realisierbar ist.

Diese Aufgabe wird durch die Merkmale des Patentanspruchs 1 gelöst. Vorteilhafte Weiterbildungen sind in den Unteransprüchen angeben.

Beim erfindungsgemäßen Verfahren werden seitens einer ersten Baugruppe ein lokales Taktsignal und ein Rahmen gebildet. Das Taktsignal und der Rahmen werden unter Verwendung einer synchronen Übertragung mit vorhersagbarer Laufzeit an eine zweite Baugruppe übertragen. Seitens der zweiten Baugruppe wird ein Referenz-Taktsignal empfangen und eine Phasendifferenz und eine Zeitdifferenz zwischen dem übertragenen Taktsignal einerseits und dem Referenz-Taktsignal andererseits bestimmt.

Die Phasendifferenz und die Zeitdifferenz werden von der zweiten Baugruppe zur ersten Baugruppe über eine Verbindung ohne vorhersagbare Laufzeit übertragen. Seitens der ersten Baugruppe werden die Phasendifferenz und die Zeitdifferenz zur Ermittlung einer Stellgröße verwendet, wobei die Stellgröße die Bildung des lokalen Taktsignals derart steuert, dass die erste und die zweite Baugruppe zeitsynchronisiert sind.

Mit Hilfe des erfindungsgemäßen Verfahrens kann eine für die ausschließliche Übertragung des hochgenauen Referenzsignals vorgesehene Übertragungsleitung eingespart werden.

In einer vorteilhaften Weiterbildung erfolgt die Zeitsynchronisation unter Verwendung einer CPRI-Schnittstelle bzw. eines CPRI-Netzwerks, das ohnehin zwischen den Baugruppen zur Übertragung von Daten- und Steuersignalen vorhanden ist.

Mit einer CPRI-Schnittstelle ist es möglich, Entfernungen bis zu 10 km zu überbrücken.

Nachfolgend wird die Erfindung anhand einer Zeichnung näher erläutert. Dabei zeigt:
- FIG 1: ein erstes Ausführungsbeispiel des erfindungsgemäßen Verfahrens, und
- FIG 2: ein zweites Ausführungsbeispiel des erfindungsgemäßen Verfahrens.

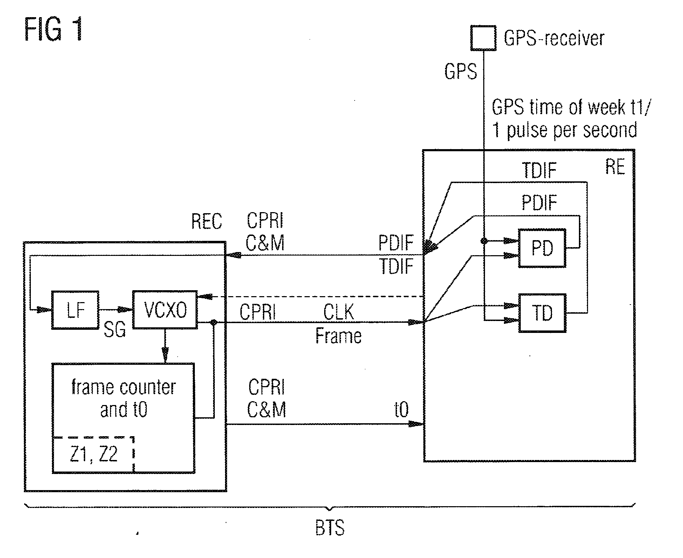

FIG 1 zeigt ein erstes Ausführungsbeispiel des erfindungsgemäßen Verfahrens.

Eine erste Baugruppe REC und eine zweite Baugruppe RE einer Basisstation BTS sind bevorzugt über ein Netzwerk CPRI miteinander verbunden. Das CPRI-Netzwerk ermöglicht eine synchrone Übertragung von Signalen mit einer vorhersagbaren Laufzeit zwischen den Baugruppen RE und REC.

Die erste Baugruppe REC beinhaltet einen Oszillator VCXO und einen Rahmengenerator RG, wobei mit Hilfe des Oszillators VCXO ein lokales Taktsignal CLK und mit Hilfe des Rahmengenerators RG ein Rahmen Frame gebildet wird.

Das lokale Taktsignal CLK und der Rahmen Frame werden unter Verwendung der synchronen Übertragung mit vorhersagbarer Laufzeit an eine zweite Baugruppe RE übertragen.

Zur Übertragung des Taktsignals CLK und des Rahmens Frame wird bevorzugt ein Layerl-Protokoll des CPRI-Netzwerks verwendet.

Seitens der zweiten Baugruppe RE wird ein Referenz-Taktsignal GPS über einen GPS-Receiver empfangen.

Die zweite Baugruppe RE beinhaltet einen Phasenindikator PD und einen Zeitindikator TD, mit denen eine Phasendifferenz PDIF und eine Zeitdifferenz TDIF zwischen dem übertragenen Taktsignal CLK einerseits und dem Referenz-Taktsignal GPS andererseits bestimmt wird.

Die Phasendifferenz PDIF und die Zeitdifferenz TDIF werden von der zweiten Baugruppe RE zur ersten Baugruppe REC über eine Verbindung ohne vorhersagbare Laufzeit übertragen.

Diese Übertragung wird bevorzugt als Paketdatenübertragung unter Verwendung eines Internet-Protokolls durchgeführt.

Bevorzugt ist die Verbindung ohne vorhersagbare Laufzeit als Control&Management-Kanal (C&M) des CPRI-Netzwerks ausgebildet.

Seitens der ersten Baugruppe REC wird die Phasendifferenz PDIF und die Zeitdifferenz TDIF zur Ermittlung einer Stellgröße SG verwendet, mit der die Bildung des lokalen Taktsignals CLK gesteuert wird. Diese Steuerung erfolgt derart, dass eine Zeitsynchronisierung der ersten Baugruppe REC und der zweiten Baugruppe RE durchgeführt wird.

Bevorzugt wird eine zeitliche Häufigkeit bestimmt, mit der die Messergebnisse von Phasendifferenz PDIF und Zeitdifferenz TDIF seitens der ersten Baugruppe REC empfangen werden. Diese Häufigkeit wird bei der Ermittlung der Stellgröße zusätzlich berücksichtigt.

In einer bevorzugten Weiterbildung werden die Zeitpunkte der Messungen der Phasendifferenz PDIF und der Zeitdifferenz TDIF mit einer Rahmennummer gekennzeichnet und an die erste Baugruppe REC übermittelt, um diese Zeitpunkte bei der Ermittlung der Stellgröße des Oszillators VCXO berücksichtigen zu können.

Vom GPS-Empfänger wird beispielsweise ein Zeitsignal GPS in Form von einem Puls pro Sekunde an die zweite Baugruppe RE übertragen. Alternativ dazu kann eine als "GPS time of week t1" bezeichnetes Zeitsignal als Wochenzeit t1 an die zweite Baugruppe RE übertragen werden.

Seitens der ersten Baugruppe REC ist dem Oszillator VCXO ein Schleifenfilter LF zur Bildung der Stellgröße SG vorgeschaltet, an den die Zeitdifferenz TDIF und die Phasendifferenz PDIF gelangt.

Der Oszillator VCXO kann beispielsweise als Ofenquarz ausgebildet sein.

Der Master-Oszillator VCXO ist ausgangsseitig mit einer Zähleinheit "frame counter and t0" verbunden, die Schwingungsperioden des Master-Oszillators VCXO zunächst innerhalb eines Rahmen "frame" zählt.

Beispielsweise wird bei einem UMTS-Funkkommunikationssystem ein UMTS-Rahmen "frame" der zeitlichen Länge von 10ms verwendet. Bei einer Schwingungsfrequenz von 38,4 MHz zählt die Zähleinheit "frame counter and t0" in einem ersten Teil von einem Wert "0" bis "383999" und beginnt dann erneut vom Wert "0" an zu zählen. Zu diesem Zweck weist die Zähleinheit "frame counter and t0" einen ersten Zähler Z1 auf.

In einem zweiten Teil werden durch die Zähleinheit "frame counter and t0" nun Rahmen "frame" gezählt, wobei ein zweiter Zähler Z2 der Zähleinheit "frame counter and t0" erhöht wird. Die Erhöhung erfolgt immer dann, wenn der erste Zähler Z1 im vom oben genannten Wert "383999" auf den Wert "0" springt.

Beim beispielhaften UMTS-Funkkommunikationssystem würde der zweite Zähler Z2 vom Wert "0" bis zu einem Wert "4095" zählen und damit eine "Node B frame number, BFN" indizieren, die in 3GPP TS 25.402 definiert ist und im CPRI-Standard verwendet wird.

In einem dritten Teil der Zähleinheit "frame counter and t0" wird eine Zeitvariable t0 verwaltet. Beim beispielhaften UMTS-Funkkommunikationssystem wird die Zeitvariable t0 immer um einen Wert von "40.96 sec" erhöht, wenn der zweite Zähler Z2 vom Wert "4095" auf den Wert "0" springt.

Der erste Zähler Z1, der die Werte von "0" bis "383999" zählt, der zweite Zähler Z2, der die Werte von "0" bis "4095" zählt und die Zeitvariable t0 stellen ein Uhrzeitsystem dar.

An den Zeitindikator TD wird die Zeitvariable t0 übertragen, wobei diese Übertragung bevorzugt über den CPRI_Kanal "C&M" erfolgt.

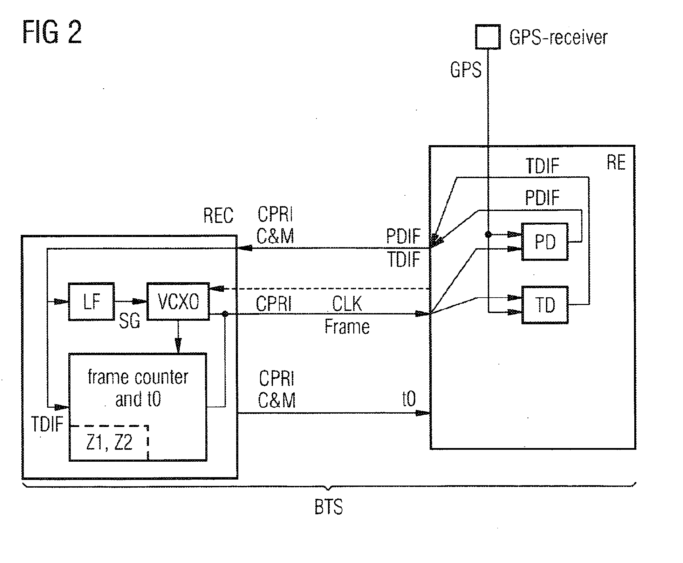

Das Uhrzeitsystem kann auf eine Wochenzeit "GPS time of week" t1 oder auf eine GPS-Zeit t1 bzw. auf die koordinierte Weltzeit (UTC) bezogen werden. Dabei sind nachfolgend zwei beispielhafte Möglichkeiten näher beschrieben:
In einer ersten Ausgestaltung gemäß FIG 2 gibt es für die Zählerstände des ersten Zählers Z1="0" und des zweiten Zählers Z2="0" für jede Zeitvariable t0 eine Zuordnung zur GPS-Zeit t1, die vom Zeitindikator TD ermittelt wird.

Zu diesem Zweck werden dem Zeitindikator TD die Zählerstände des ersten Zählers Z1 und des zweiten Zählers Z2 über die CPRI-Rahmeninformation BFN gemäß dem Standard CPRI, Version V2.0, übertragen. Außerdem wird an den Zeitindikator TD die Zeitvariable t0 übertragen, wobei diese Übertragung bevorzugt über den CPRI_Kanal "C&M" erfolgt.

In einer zweiten Ausgestaltung wird die Zähleinheit "frame counter and t0" aufgrund einer Information des Zeitindikator TD gezielt rückgesetzt.

Diese Rücksetzung kann unter Verwendung der Zeitdifferenz "TDIF" erfolgen.

Beispielsweise wird der Zählerstand des ersten Zählers auf den Wert "0" gesetzt, während der Zählerstand des zweiten Zählers auf den Wert "0" für BFN=Z2="0" gesetzt wird.

Durch das gezielte Rücksetzen die CPRI-Rahmens "frame" mit der Wochenzeit t1 wird eine Synchronisation derart durchgeführt, dass zum Beginn jeder Sekunde der Wochenzeit t1 exakt ein CPRI-Rahmen "frame" beginnt. Im Beispiel erfolgt dies dann, wenn der erste Zähler vom Wert "383999" auf den Wert "0" springt.

Darüber hinaus kann auch für jede GPS-Zeit t1 eindeutig ein Zählerstand des ersten Zählers Z1 und des zweiten Zählers Z2 definiert werden, wobei der Zählerstand des zweiten Zählers über die "Node B frame number, BFN" definiert wird.

Durch die Zählerstände des ersten und des zweiten Zählers Z1, Z2 können mehrere Basisstationen synchronisiert werden. Dabei erfolgt das gezielte Rücksetzen derart, dass zu einer für alle Basisstationen gleich definierten Zeit die Zählerstände des ersten und des zweiten Zählers auf den Wert "0" definiert gesetzt werden.

Beispielsweise wird dazu ein Zeitpunkt "Montag, 01.01.2007, 0:00'00" Uhr" gewählt. Das Rücksetzen kann nicht nur am "Montag, 01.01.2007, 0:00'00" Uhr" erfolgen, sondern kann um beliebige ganzzahlige Vielfache von 40.96sec nach diesem "Montag 0:00'00" Uhr" erfolgen.

## Patentansprüche

1. Verfahren zur Synchronisation von Baugruppen (REC, RE) einer Basisstation (BTS) auf ein Referenz-Taktsignal (GPS),
- bei dem seitens einer ersten Baugruppe (REC) ein lokales Taktsignal (CLK) und ein Rahmen (Frame) gebildet wird,
- bei dem das Taktsignal (CLK) und der Rahmen (Frame) unter Verwendung einer synchronen Übertragung mit vorhersagbarer Laufzeit an eine zweite Baugruppe (RE) übertragen wird,
- bei dem seitens der zweiten Baugruppe (RE) das Referenz-Taktsignal (GPS) empfangen wird, **dadurch gekennzeichnet daß** seitens der zweiten Baugruppe weiterhin eine Phasendifferenz (PDIF) und eine Zeitdifferenz (TDIF) zwischen dem übertragenen Taktsignal (CLK) und dem Rahmen (Frame) einerseits und dem Referenz-Taktsignal (GPS) andererseits bestimmt wird,
- bei dem die Phasendifferenz (PDIF) und die Zeitdifferenz (TDIF) von der zweiten Baugruppe (RE) zur ersten Baugruppe (REC) über eine Verbindung ohne vorhersagbare Laufzeit übertragen werden,
- bei dem seitens der ersten Baugruppe (REC) die Phasendifferenz (PDIF) und die Zeitdifferenz (TDIF) zur Ermittlung einer Stellgröße (SG), die die Bildung des lokalen Taktsignals (CLK) steuert, verwendet wird, so dass die erste und die zweite Baugruppe (REC, RE) zeitsynchronisiert werden.

2. Verfahren nach Anspruch 1,
- bei dem seitens der zweiten Baugruppe (RE) ein Phasenindikator (PD) und ein Zeitindikator (TD) verwendet wird, um die Phasendifferenz (PDIF) und die Zeitdifferenz (TDIF) zu bestimmen, und/oder
- bei dem seitens der ersten Baugruppe (REC) ein Oszillator (VCXO) und ein Rahmengenerator (RG) verwendet wird, um das lokale Taktsignal (CLK) und den Rahmen (Frame) zu bilden.

3. Verfahren nach Anspruch 1 oder 2, bei dem seitens der zweiten Baugruppe (RE) ein GPS-Signal (GPS) als Referenz-Taktsignal (GPS) empfangen wird.

4. Verfahren nach Anspruch 1, bei dem ein CPRI-Netzwerk zur synchronen Übertragung mit vorhersagbarer Laufzeit verwendet wird.

5. Verfahren nach Anspruch 4, bei dem zur Übertragung des Taktsignals (CLK) und des Rahmens (Frame) ein Layerl-Protokoll des CPRI-Netzwerks verwendet wird.

6. Verfahren nach Anspruch 1 oder 2, bei dem über die Verbindung ohne vorhersagbare Laufzeit Paketdaten übertragen werden.

7. Verfahren nach Anspruch 6, bei dem zur Übertragung der Paketdaten ein Internet-Protokoll verwendet wird.

8. Verfahren nach Anspruch 6 oder 7, bei dem zur Übertragung der Datenpakete ein Control&Management-Kanal (C&M) des CPRI-Netzwerks verwendet wird.

9. Verfahren nach einem der vorhergehenden Ansprüche, bei dem eine zeitliche Häufigkeit bestimmt wird, mit der die Messergebnisse von Phasendifferenz (PDIF) und Zeitdifferenz (TDIF) seitens der ersten Baugruppe (REC) empfangen werden, und diese Häufigkeit bei der Ermittlung der Stellgröße (SG) berücksichtigt wird.

10. Verfahren nach einem der vorhergehenden Ansprüche, bei dem Zeitpunkte der Messungen mit einer Rahmennummer **gekennzeichnet** werden und die Zeitpunkte der Messungen bei der Ermittlung der Stellgröße (SG) des Oszillators (VCXO) berücksichtigt werden.

11. Eine Baugruppe (RE) einer Basisstation bestehend aus einem Phasenindikator (PD) und einem Zeitindikator (TD) zum Empfang eines Taktsignals (CLK) und eines Rahmens (Frame) und eines Referenz-Taktsignal (GPS),
zur Bestimmung einer Phasendifferenz (PDIF) und einer Zeitdifferenz (TDIF)
zwischen dem Taktsignal (CLK) und dem Rahmen (Frame) einerseits und dem Referenz-Taktsignal (GPS) andererseits, und
zum Senden der Phasendifferenz (PDIF) und der Zeitdifferenz (TDIF)zur Synchronisation.

## Claims

1. Method for synchronization of assemblies (REC, RE) in a base station (BTS) with a reference clock signal (GPS),
- in which a local clock signal (CLK) and a frame (Frame) are formed by a first assembly (REC),
- in which the clock signal (CLK) and the frame (Frame) are transmitted to a second assembly (RE) by using a synchronous transmission with a predictable propagation time,
- in which the reference clock signal (GPS) is received by the second assembly (RE), **characterized in that** a phase difference (PDIF) and a time difference (TDIF) are furthermore determined between the transmitted clock signal (CLK) and the frame (Frame), on the one hand, and the reference clock signal (GPS), on the other hand, by the second assembly
- in which the phase difference (PDIF) and the time difference (TDIF) are transmitted from the second assembly (RE) to the first assembly (REC) via a link without a predictable propagation time, and
- in which the phase difference (PDIF) and the time difference (TDIF) are used by the first assembly (REC) to determine a manipulated variable (SG) that controls the formation of the local clock signal (CLK) such that the first and second assemblies (REC, RE) are synchronized in time.

2. Method according to Claim 1,
- in which a phase indicator (PD) and a time indicator (TD) are used by the second assembly (RE) in order to determine the phase difference (PDIF) and the time difference (TDIF), and/or
- in which an oscillator (VCXO) and a frame generator (RG) are used by the first assembly (REC) in order to form the local clock signal (CLK) and the frame (Frame).

3. Method according to Claim 1 or 2, in which a GPS signal (GPS) is received as reference clock signal (GPS) by the second assembly (RE).

4. Method according to Claim 1, in which a CPRI network is used for synchronous transmission with a predictable propagation time.

5. Method according to Claim 4, in which a layer1 protocol of the CPRI network is used to transmit the clock signal (CLK) and the frame (Frame).

6. Method according to Claim 1 or 2, in which packet data are transmitted via the link without a predictable propagation time.

7. Method according to Claim 6, in which an Internet protocol is used to transmit the packet data.

8. Method according to Claim 6 or 7, in which a control & management channel (C&M) of the CPRI network is used to transmit the data packets.

9. Method according to one of the preceding claims, in which there is determined a temporal frequency with which the measurement results of phase difference (PDIF) and time difference (TDIF) are received by the first assembly (REC), and this frequency is considered when determining the manipulated variable (SG).

10. Method according to one of the preceding claims, in which instants of the measurements are marked with a frame number, and the instants of the measurements are considered when determining the manipulated variable (SG) of the oscillator (VCXO).

11. Assembly (RE) in a base station, comprising a phase indicator (PD) and a time indicator (TD) for receiving a clock signal (CLK) and a frame (Frame), and a reference clock signal (GPS) for determining a phase difference (PDIF) and a time difference (TDIF) between the clock signal (CLK) and the frame (Frame), on the one hand, and the reference clock signal (GPS), on the other hand, and for transmitting the phase difference (PDIF) and the time difference (TDIF) for synchronization.

## Revendications

1. Procédé de synchronisation de modules (REC, RE) d'une station de base (BTS) sur un signal d'horloge de référence (GPS), dans lequel :
- un signal d'horloge local (CLK) et une trame (Frame) sont formés du côté d'un premier module (REC) ;
- le signal d'horloge (CLK) et la trame (Frame) sont transmis à un deuxième module (RE) avec utilisation d'une transmission synchrone avec un temps de propagation prévisible ;
- le signal d'horloge de référence (GPS) est reçu du côté du deuxième module (RE) ;
**caractérisé en ce que** sont en outre déterminées, du côté du deuxième module, une différence de phase (PDIF) et une différence de temps (TDIF) entre le signal d'horloge transmis (CLK) et la trame (Frame), d'une part, et le signal d'horloge de référence (GPS), d'autre part ;
- dans lequel la différence de phase (PDIF) et la différence de temps (TDIF) sont transmises du deuxième module (RE) au premier module (REC) via une liaison sans temps de propagation prévisible ;
- dans lequel, du côté du premier module (REC), la différence de phase (PDIF) et la différence de temps (TDIF) sont utilisées pour déterminer une grandeur de réglage (SG) qui commande la formation du signal d'horloge local (CLK) de sorte que le premier et le deuxième modules (REC, RE) sont synchronisés dans le temps.

2. Procédé selon la revendication 1, dans lequel :
- sont utilisés, du côté du deuxième module (RE), un indicateur de phase (PD) et un indicateur de temps (TD) pour déterminer la différence de phase (PDIF) et la différence de temps (TDIF), et/ou
- sont utilisés, du côté du premier module (REC), un oscillateur (VCXO) et un générateur de trame (RG) pour former le signal d'horloge local (CLK) et la trame (Frame).

3. Procédé selon la revendication 1 ou 2, dans lequel est reçu, du côté du deuxième module (RE), un signal GPS (GPS) en tant que signal d'horloge de référence (GPS).

4. Procédé selon la revendication 1, dans lequel un réseau CPRI est utilisé pour la transmission synchrone avec un temps de propagation prévisible.

5. Procédé selon la revendication 4, dans lequel est utilisé, pour la transmission du signal d'horloge (CLK) et de la trame (Frame), un protocole de couche 1 du réseau CPRI.

6. Procédé selon la revendication 1 ou 2, dans lequel des données en paquets sont transmises via la liaison sans temps de propagation prévisible.

7. Procédé selon la revendication 6, dans lequel un protocole internet est utilisé pour la transmission des données en paquets.

8. Procédé selon la revendication 6 ou 7, dans lequel est utilisé, pour la transmission des paquets de données, un canal de commande et de gestion (C&M) du réseau CPRI.

9. Procédé selon l'une des revendications précédentes, dans lequel est déterminée une fréquence temporelle à laquelle les résultats de mesure de la différence de phase (PDIF) et de la différence de temps (TDIF) sont reçus du côté du premier module (REC) et cette fréquence est prise en compte pour déterminer la grandeur de réglage (SG).

10. Procédé selon l'une des revendications précédentes, dans lequel des instants des mesures sont identifiés par un numéro de trame et les instants des mesures sont pris en compte lors de la détermination de la grandeur de réglage (SG) de l'oscillateur (VCXO).

11. Un module (RE) d'une station de base, composé d'un indicateur de phase (PD) et d'un indicateur de temps (TD),
- pour recevoir un signal d'horloge (CLK) et une trame (Frame) et un signal d'horloge de référence (GPS) ;
- pour déterminer une différence de phase (PDIF) et une différence de temps (TDIF) entre le signal d'horloge (CLK) et la trame (Frame), d'une part, et le signal d'horloge de référence (GPS), d'autre part ; et
- pour émettre la différence de phase (PDIF) et la différence de temps (TDIF) pour synchronisation.
